**Europäisches Patentamt**

**European Patent Office**

**Office européen des brevets**

(19)

(11) Veröffentlichungsnummer: **0 278 435**

**A1**

(12) # EUROPÄISCHE PATENTANMELDUNG

(21) Anmeldenummer: **88101713.1**

(22) Anmeldetag: **05.02.88**

(51) Int. Cl.⁴: **B60R 9/04**

(30) Priorität: **06.02.87 DE 3703710**

(43) Veröffentlichungstag der Anmeldung:
**17.08.88 Patentblatt 88/33**

(84) Benannte Vertragsstaaten:
**AT DE FR GB GR IT SE**

(71) Anmelder: **Tittel, Eberhard**
**Lagerstrasse 1**
**D-7981 Grünkraut-Gullen(DE)**

(72) Erfinder: **Tittel, Eberhard**
**Lagerstrasse 1**
**D-7981 Grünkraut-Gullen(DE)**

(74) Vertreter: **Schmidt-Evers, Jürgen, Dipl.-Ing. et**
**al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer**
**Steinsdorfstrasse 10**
**D-8000 München 22(DE)**

(54) **Vorrichtung zum Befestigen eines Auto-Dachträgers an einem Autodach.**

(57) Eine Vorrichtung zum Befestigen eines Auto-Dachträgers (2) an einem Autodach (1) ist so auszugestalten, daß bei Gewährleistung einer kostengünstigen Lösungsform der Dachträger (2) auch an solchen Dächern (1) in einfacher Weise befestigbar ist, die keine Regenrinne aufweisen, bzw. deren Regenrinne (4) von der Autotür (5) in der Schließstellung überdeckt ist. Dies wird durch wenigstens eine am Dachrand befestigbares oder befestigtes zusätzliches Bauteil (12) mit Befestigungsmittel (19) zur lösbaren Befestigung des Dachträgers (2) am Bauteil (12) erreicht.

FIG.1

## Vorrichtung zum Befestigen eines Auto-Dachträgers an einem Autodach

Die Erfindung bezieht sich auf eine Vorrichtung nach dem Oberbegriff des Anspruchs 1.

Bei neueren Fahrzeugkonstruktionen ist man dazu übergegangen, zur Vermeidung von Strömungswiderständen die Regenrinne am Autodach entweder entfallen zu lassen oder von der Autotür in deren Schließstellung abzudecken. Hierdurch wird die Befestigung eines Dachträgers zwangsläufig erschwert. Im ersten Fall ist man dazu übergegangen, auf dem Dach ein Wiederlager für den Stützfuß des Dachträgers zu schaffen und den Stützfuß mittels einer zwischen dem Wiederlager und dem Dachrand wirksamen Spannvorrichtung am Dach zu befestigen. Im zweiten Falle ist schon vorgeschlagen worden, den Stützfuß so auszubilden, daß er den Spalt zwischen dem Dach und der die Regenrinne überdeckenden Tür zu durchgreifen und in üblicher Weise an der verdeckten Regenrinne befestigt zu werden vermag.

In beiden Fällen sind wesentliche Schwierigkeiten zu überwinden, die im ersten Falle durch das zusätzliche Wiederlager und im zweiten Falle durch den verhältnismäßig schmalen Spalt vorgegeben sind. In beiden Fällen besteht jedoch auch der Nachteil, daß Beschädigungen, z.B. Lackbeschädigungen, des Daches bzw. der Regenrinne selbst bei vorsichtiger Montage bzw. Demontage des Dachträgers nicht auszuschließen sind. Dabei ist zu berücksichtigen, daß auch bleibende Verformungen am Dach bzw. an der Regenrinne auftreten können, weil die Materialstärke sowohl des Daches als auch der Regenrinne verhältnismäßig gering ist.

Der Erfindung liegt die Aufgabe zugrunde, eine Vorrichtung zum Befestigen eines Dachträgers an einem Autodach so auszugestalten, daß bei Gewährleistung einer kostengünstigen Lösungsform der Dachträger auch an solchen Dächern in einfacher Weise befestigbar ist, die keine Regenrinne aufweisen, bzw. deren Regenrinne von der Autotür in der Schließstellung überdeckt ist.

Diese Aufgabe wird durch die kennzeichnenden Merkmale des Anspruchs 1 gelöst.

Bei der erfindungsgemäßen Ausgestaltung ist ein zusätzliches Bauteil in Form eines Trägers für den Dachträger vorgesehen, das unabhängig vom Vorhandensein einer Regenrinne am Autodach angeordnet werden oder angeordnet sein kann und somit die Befestigung des Dachträgers unabhängig von einer Regenrinne und auch unabhängig von einer besonderen Randform des Daches am Dach ermöglicht, wobei auf einfache Weise auch eine stabile Befestigung erreicht werden kann, weil das zusätzliche Bauteil zur Stabilität der Befestigung beiträgt bzw. selbst so groß bzw. stabil bemessen werden kann, daß die Belastungen für das Dach reduziert werden können. Bei dem zusätzlichen Bauteil kann es sich sowohl um ein Nachrüstteil handeln als auch um ein am Dach z.B. im Sinne einer Verstärkung des Dachbleches bei der Herstellung der Autokarosserie schon vorgesehenes Teil, wobei das zusätzliche Bauteil unlösbar oder vorzugsweise lösbar am Dach befestigt sein kann. Die lösbare Befestigung umfaßt insofern einen weiteren Vorteil, weil das zusätzliche Bauteil die Funktion eines Adapters übernehmen kann, wenn zusätzliche Bauteile mit gleichen Befestigungsmitteln für die Befestigung am Dach und unterschiedlichen Befestigungsmitteln für die Befestigung von Dachträgern vorgesehen werden. In einem solchen Fall können unterschiedliche Dachträger bzw. Dachträger mit unterschiedlichen Stützfüßen durch die Anordnung eines passenden zusätzlichen Bauteils am Dach befestigt werden. Hierdurch wird ermöglicht, auch Dachträger für unterschiedliche Verwendungszwecke, z.B. einen Dachträger für Ski und einen Dachträger für ein Surfbrett, an ein und demselben zusätzlichen Bauteil des Autodachs zu befestigen.

Die Ausgestaltung nach Anspruch 2 trägt zur erheblichen Stabilisierung der Befestigung bei. Außerdem kann die auf das Dach ausgeübte Flächenpressung erheblich reduziert werden. Zu diesem Vorteil trägt auch die Ausgestaltung nach Anspruch 3 bei.

Beim Vorhandensein einer durch die Autotür verdeckten Regenrinne am Autodach ist es sowohl aus Platz-als auch aus ästhetischen Gründen vorteilhaft, das zusätzliche Bauteil innerhalb der Regenrinne anzuordnen und zwar vorzugsweise gemäß Anspruch 4 an der dem Dach zugewandten Flanke der Regenrinne, so daß das zusätzliche Bauteil bei geschlossener Tür unsichtbar ist. Der oder die Stützfüße des Dachträgers können sich dabei durch den Spalt zwischen der Tür und dem Dach zum zusätzlichen Bauteil hin erstrecken.

Die Merkmale der Ansprüche 5 bis 7 tragen zur wesentlichen Vereinfachung einer erfindungsgemäßen Ausgestaltung bzw. Befestigung bei, bei der das zusätzliche Bauteil lösbar am Dach befestigt ist. Dabei trägt die Verwendung von nachträglich am Dach zu befestigenden Schrauben oder Muttern zu einer wesentlichen Vereinfachung der Montage bei. Die Verwendung von sogenannten selbstklemmenden Einsatzmuttern (Rivet-Muttern) hat sich als besonders vorteilhaft erwiesen. Es ist somit möglich, die erfindungsgemäße Vorrichtung auch an einem unvorbereiteten Autodach anzuordnen, wobei es zur Herrichtung des Autodachs lediglich der Anbringung wenigstens eines Loches für die Befestigungsschraube bedarf.

Im Rahmen der Erfindung ist es möglich, den wenigstens einen Stützfuß des Dachträgers als einstückiges Teil am zusätzlichen Bauteil anzuschrauben oder einen in an sich bekannter Weise aus einem Stützteil und einem Halteteil bestehenden Stützfuß am zusätzlichen Bauteil zu verspannen, wobei das zusätzliche Bauteil so stabil zu bemessen ist, daß die Spannkräfte vom Bauteil im wesentlichen aufgenommen und nicht in das Dach weitergeleitet werden. Als Befestigungsmittel am zusätzlichen Bauteil eignen sich hier Vor-oder Rücksprünge, die übergriffen oder in die eingegriffen werden kann (Ansprüche 8 bis 11).

Die Ausbildung nach Anspruch 12 erleichtert wesentlich die Montage bzw. Demontage, weil der wenigstens eine Stützfuß des Dachträgers von oben auf die wenigstens eine vorhandene Schraube gesetzt werden kann.

Die in den Ansprüchen 13 bis 18 beziehen sich auf einen Stützfuß, dessen Halteteil durch ein Spannteil, insbesondere ein schwenkbares Spannteil verstellbar ist. Diese Ausgestaltungen ermöglichen bei einfacher Ausbildung und Handhabung eine sichere Befestigung.

Dabei ist das Merkmal des Anspruchs 16 von besonderer Bedeutung, weil es eine Sicherung des Dachträgers am Dach durch die Tür des Fahrzeugs ermöglicht, wenn letztere abschließbar ist, was bei üblichen Fahrzeugen in der Regel der Fall ist. Es bedarf somit keiner eigenen Sicherung für den Dachträger, die durch Ausweisung der Befugnis, z.B. mittels eines Schlüssels aufzuheben wäre, und deshalb zu einer wesentlichen Verteuerung und auch Erschwerung der Handhabung führen würde. Zu diesem Vorteil führen auch die Merkmale der Ansprüche 20 bis 22, die von selbständiger erfinderischer Bedeutung sind.

Nachfolgend wird die Erfindung anhand von in vereinfachten Zeichnungen dargestellten bevorzugten Ausführungsbeispielen näher erläutert. Es zeigt:

Fig. 1 eine Vorrichtung zum Befestigen eines Auto-Dachträgers an einem Autodach im senkrechten Schnitt;

Fig. 2 den Teilschnitt II-II in Fig. 1;

Fig. 3 eine abgewandelte Ausführungsform der Vorrichtung im vertikalen Schnitt;

Fig. 4 die Vorrichtung nach Fig. 3 in der Ansicht von links;

Fig. 5 ein erfindungsgemäß ausgestaltetes zusätzliches Bauteil der Vorrichtung gemäß Fig. 3 in der Vorderansicht;

Fig. 6 den Schnitt VI-VI in Fig. 5;

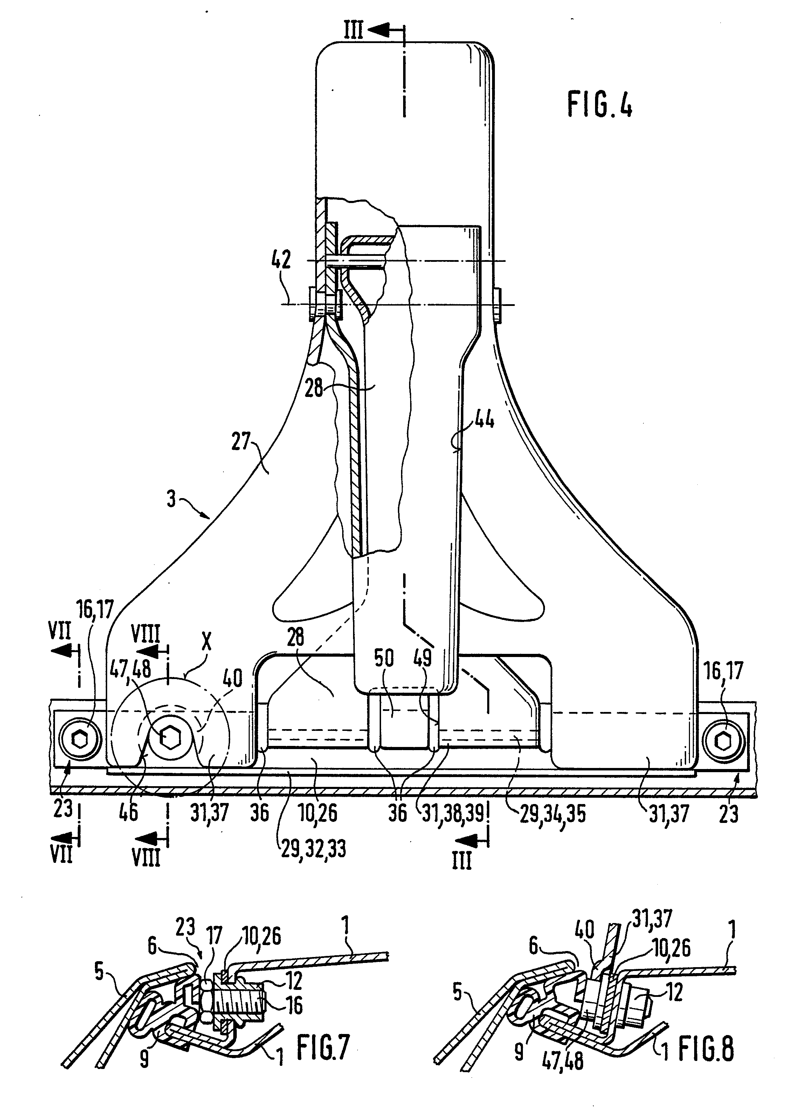

Fig. 7 den Schnitt VII-VII in Fig. 4;

Fig. 8 den Schnitt VIII-VIII in Fig. 4 durch eine abgewandelte Einzelheit.

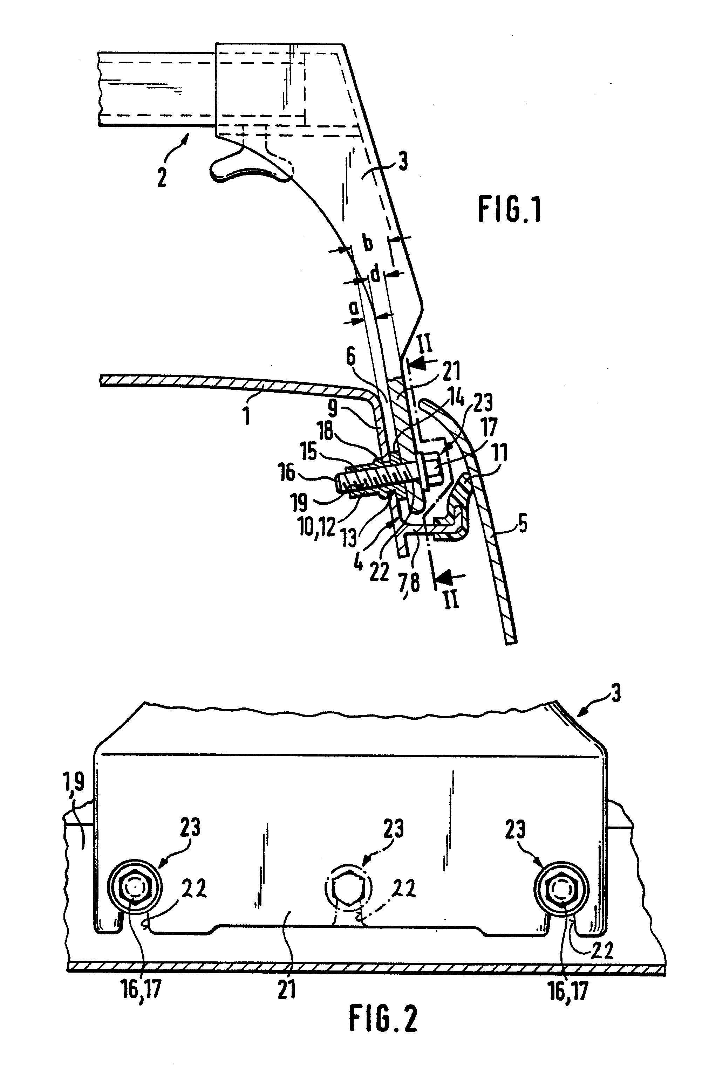

Fig. 1 zeigt den Randbereich des Autodaches 1 mit einem daran befestigten Auto-Dachträger 2, von dem aus vereinfa chungsgründen im wesentlichen nur der Stützfuß 3 dargestellt ist. Das Dach 1 weist eine sogenannte integrierte Regenrinne 4 auf, die durch die zugehörige Autotür 5 in deren Schließstellung bis auf einen oberen Spalt 6 seitlich abgedeckt ist.

Die Regenrinne 4 wird durch einen Winkelabschnitt 7 des Daches 1 gebildet, dessen Schenkel 8 in etwa horizontal von einem sich abwärts erstreckenden Schenkelabschnitt 9 des Daches 1 ausgeht.

Auf dem freien Ende des Schenkels 8 ist ein Dichtungsprofil 11 aufgesetzt, das bei geschlossener Tür 5 dichtend an deren Innenseite anliegt.

Bei allen Ausführungsbeispielen ist zur Befestigung des Stützfußes 3 am Dach 1 wenigstens ein zusätzliches Bauteil 10 vorgesehen, das gemäß den Fig. 1 und 2 durch eine sogenannte Einsatzmutter 12 gebildet ist, die im Bereich eines Loches 13 am Schenkelabschnitt 9 des Daches 1, d.h. im Bereich der Regenrinne 4 am Dach 1, durch Verformung befestigt ist.

Die Einsatzmutter 12 weist einen Kragen 14 und einen davon ausgehenden Mutterkörper 15 auf, der das Loch 13 durchfaßt, wobei der Kragen 14 außenseitig am Schenkelabschnitt 9 anliegt. Die Befestigung der Einsatzmutter 12 am Dach 1 bzw. im Loch 13 erfolgt durch Einstecken des Mutterkörpers 15 in das Loch 13 und Einschrauben einer Schraube 16 mit Kopf 17 sowie "Anziehen" der Schraube 16 über den Einschraubbereich hinaus, wobei der Mutterkörper 15 axial komprimiert wird, und sich innenseitig am Schenkelabschnitt 9 des Daches 1 ein Wulst 18 bildet, durch den die Einsatzmutter 12 axial festgeklemmt und somit festgelegt wird. Falls gewünscht, kann eine besondere Verdrehsicherung dadurch gebildet werden, daß das Loch 13 einen unrunden Querschnitt oder eine Ausnehmung (nicht dargestellt) erhält, in den sich der Wulst 18 hineinpreßt. Das ein Befestigungsmittel für den Dachträger 2 bildende Gewinde der Einsatzmutter 12 ist mit 19 bezeichnet.

Vorbeschriebene Einsatzmuttern 12 werden auf dem Markt vertrieben, z.B. von der Firma ATLAS ENGINEERING INC. unter dem Warenzeichen ATLAS BNP bzw. unter der Bezeichnung "BLINDNUT PLATE".

Der Stützfuß 3 ist an seinem freien, hier unteren Ende plattenförmig ausgebildet, und er ist mit diesem Ende mittels zwei in einem Abstand voneinander angeordnete Schrauben 16 und Einsatzmuttern 12 am Dach 1 befestigt. Hierzu weist das plattenförmige Ende 21 in einem Abstand angeordnete Löcher 22 auf, durch die hindurch sich die Schrauben 16 erstrecken. Vorzugsweise werden die Löcher 22 durch von den Unterkanten der Stützfüße 3 ausgehende, insbesondere divergierende Ausnehmungen gebildet (Fig. 2), wodurch es möglich ist, den Stützfuß von oben auf die Schrauben 16 aufzusetzen und nach oben wieder zu entfernen. Es ist möglich, wenigstens eine weitere Schraube 16 anzuordnen, wie es in Fig. 2 angedeutet ist.

Die Dicke d des plattenförmigen Endes 21 des Stützfußes 3 beträgt etwa 2 - 3 mm und ist geringer bemessen, als die Breite b des Spaltes 6, wobei zu beiden Seiten des Stützfußes 3 ein ausreichendes Spiel zum Dach 1 bzw. zur Tür 5 hin vorhanden ist. Aufgrund des Vorhandenseins des Kragens 14 ist der Stützfuß 3 in einem der Dicke des Kragens 14 entsprechenden Abstand a vom Dach 1 angeordnet. Dies ist vorteilhaft, weil es eine Anpassung des Stützfußes 3 an die Kontur des Daches 1 nicht bedarf.

Die Einsatzmuttern 12 können bei der Herstellung der Autokarosserie schon am Dach 1 befestigt sein, oder sie können auch nachgerüstet werden. Hierzu ist es lediglich erforderlich, die Löcher 13 zu bohren und die Einsatzmuttern 12 wie vorbeschrieben einzusetzen. Es empfiehlt sich, die Löcher 13 höher anzusetzen als die dargestellte Abwinkelung des Schenkels 8, so daß ein ungestörtes Bohren möglich ist.

Die vom Dachträger 2 in das Dach 1 eingeleitete Last verteilt sich auf beide allgemein mit 23 bezeichnete Befestigungsstellen.

Anstelle der dargestellten Sechskant-Köpfe 17 können die Schrauben 16 auch andere Eingriffselemente, z.B. Schlitze, aufweisen.

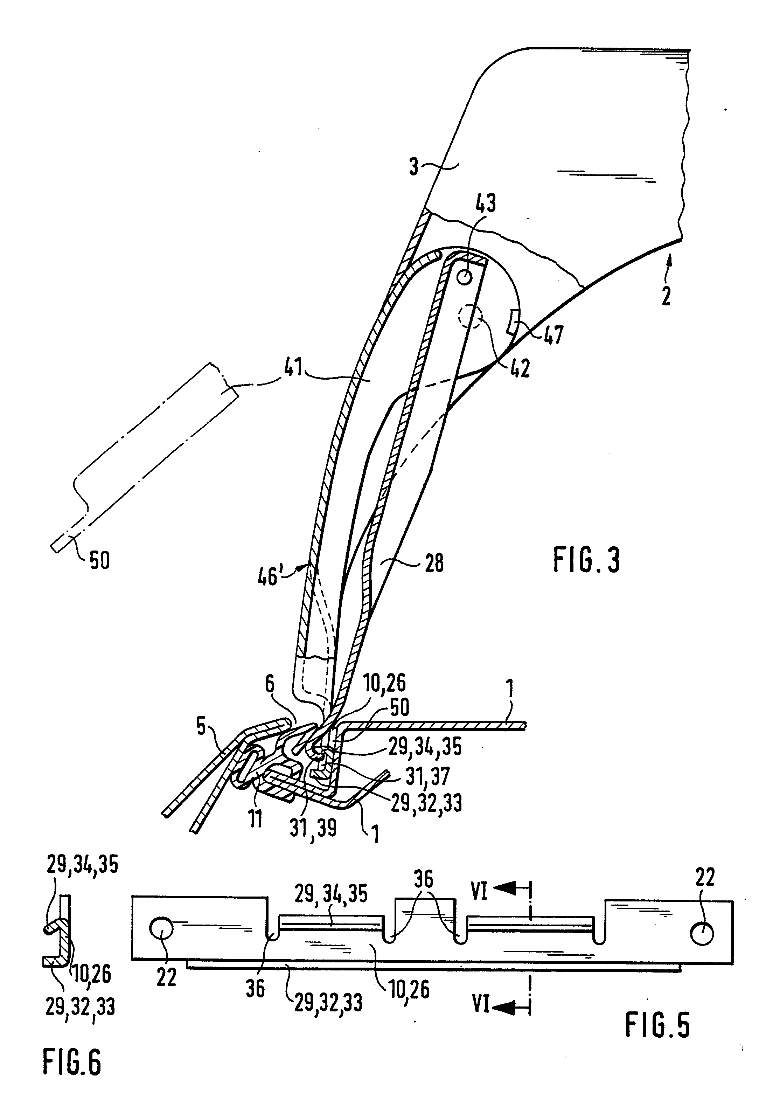

Beim Ausführungsbeispiel gemäß Fig. 3 bis 6 sind einander entsprechende Teile mit gleichen Bezugszeichen bezeichnet. Ein wesentlicher Unterschied besteht hinsichtlich der Ausgestaltung des Stützfußes 3 und des zusätzlichen Bauteils 10, das hier durch eine Platine bzw. Platte 26 gebildet ist, wobei der Stützfuß 3 mittels der Platte 26 und mittels der Schrauben 16 und Einsatzmuttern 12 am Dach 1 befestigt ist.

Bei diesem Ausführungsbeispiel weist der Stützfuß 3 ein Stützteil 27 und ein Halteteil 28 auf, die relativ zueinander etwa senkrecht verschiebbar sind, und mittels denen er an der Platte 26 verspannt werden kann, die hierzu allgemein mit 29 bezeichnete Befestigungsmittel aufweist, die mit Befestigungsmitteln 31 am Stützteil 27 und Halteteil 28 korrespondieren. Beim Ausführungsbei spiel gemäß Fig. 3 bis 6 bestehen die Befestigungsmittel 29 an der Platte 26 aus einem durch eine Abwinkelung 32 gebildeten Vorsprung 33 und einen an der gleichen Seite angeordneten Rücksprung 34, der ebenfalls durch eine Abwinkelung 35 gebildet ist, jedoch auch durch eine Ausnehmung in der Platte 26 gebildet sein könnte. Die Abwinkelungen 32, 35 sind aus Einschnitten 36 der Platte 26 herausgebogen. Die Befestigungsglieder 31 des Stützfußes 3 bestehen aus einem Steg 37 am unteren Ende des Stützteils 27, der sich auf dem Vorsprung 33 abstützt, und einem durch eine hakenförmige Abwinkelung 38 gebildeten Vorsprung 39 am unteren Ende des Halteteils 28, der den Rücksprung 34 an der Platte 26 untergreift.

Der Stützfuß 3 läßt sich somit durch einen Zug nach oben am Halteteil 28 an der Platte 26 verspannen, wobei eine unmittelbare Berührung zwischen dem Stützfuß 3 und dem Dach 1 vermieden ist, weil der Stützfuß 3 lediglich mit der Platte 26 in Kontakt steht.

Das Halteteil 28 ist durch einen Schwenkhebel 41 verstellbar, der um eine horizontale Schwenkachse 42 schwenkbar am Stützteil 27 gelagert und in an sich bekannter Weise in einem Abstand von der Schwenkachse 42 in einem Gelenk 43 mit dem Halteteil 28 gelenkig verbunden ist. Die Anordnung ist so getroffen, daß die Spannwirkung - wie in Fig. 3 dargestellt - hinter dem Todpunkt des Gelenks 43 bezüglich der Schwenkachse 42 erfolgt, um eine stabile Position des Spannhebels 41 in seiner Schließstellung zu erreichen.

Der Spannhebel 41 ist in einer mittleren Aussparung 44 des gabelförmig ausgebildeten Stützteil 27 gelagert, und die Anordnung ist so getroffen, daß der Spannhebel 41 in seiner Spannstellung in der Aussparung 44 versenkt ist.

Das Stützteil 27, das Halteteil 28 und auch der Spannhebel 41 bestehen vorzugsweise aus tiefgezogenen Blechteilen, wodurch sich bei geringem Materialverbrauch und somit auch geringem Gewicht eine hohe Stabilität ergibt.

Es ist von Vorteil, den Vorsprüngen 33, 39 und dem Rücksprung 34 Hinterschneidungen zuzuordnen, damit ein seitliches Abrutschen, insbesondere des Stegs 37 verhindert ist.

Beim Ausführungsbeispiel gemäß Fig. 4 befinden sich die Befestigungsstellen 23 außerhalb des Stützfußes 3. Es ist jedoch gemäß der eine Alternative darstellenden Einzelheit X in Fig. 4 auch möglich, die Befestigungsstellen 23 innerhalb der Gabelenden 45 des Stützteils 27 anzuordnen und dabei Löcher 46 bzw. Ausnehmungen entsprechend Fig. 2 in den Gabelenden 45 vorzusehen, die die Schrauben 47 oder deren vorzugsweise runden Köpfe 48 aufnehmen, wodurch der Stützfuß 3 bei leichter Montage horizontal fixiert wird. Diese Fixierung kann auch durch zu den Schrauben 16 zusätzliche Fixierungselemente, z.B. Nocken, erreicht werden. Die Auswölbungen 40 wird hierbei erreicht, daß der Kragen 14 der Einsatzmutter 12 freiliegt. Wie schon beim Ausführungsbeispiel gemäß Schnitt VII-VII liegt auch hier die Platte 26 am Dach 1 an.

Die Platte 26, bei der es sich um ein Stanzteil handelt, kann aus Kunststoff oder vorzugsweise aus Metall bestehen. Im letzteren Fall ist die Platte 26 zwecks Verhinderung der Korrosion ggf. durch Kunststoffbeschichtung oberflächenbehandelt oder sie besteht aus nichtrostendem Material.

Zwecks Erleichterung der Handhabung beim Lösen der allgemein mit 46 bezeichneten Spannvorrichtung ist am Spannhebel 41 ein Ansatz oder Nocken 47 angeordnet, der beim Lösen des Spannhebels 41 gegen die Innenseite des Halteteils 28 drückt und somit letzteres aus der Verhakung mit dem Rücksprung 34 an der Platte 26 löst. Um im Spalt 6 so wenig Baubreite wie möglich zu erreichen, weist das Halteteil 28 eine mittige Ausnehmung 49 auf, in die der Spannhebel 41 mit seinem freien Ende 50 eintaucht bzw. das Halteteil 28 kreuzt.

Dem vorbeschriebenen Dachträger 2 ist auf der nicht dargestellten anderen Seite ebenfalls ein Stützfuß 3 zugeordnet. Zur Bildung einer kompletten Dachträgereinheit können wenigstens zwei Dachträger 2 hintereinander angeordnet werden. Bei Fahrzeugen mit nur zwei (vorderen) Türen ist ggf. für den hinteren Dachträger 2 eine erfindungsgemäße Befestigung in anderer Ausgestaltung erforderlich, wenn die Regenrinne 4 sich nicht im Bereich beider Dachträger 2 erstrecken sollte.

Sowohl bei dem Ausführungsbeispiel gemäß Fig. 2 und 3 als auch dem gemäß Fig. 3 und 4 ergibt sich eine Sicherung des Dachträgers 2 bzw. seiner Stützfüße 3 gegen unbefugte Entfernung dadurch, daß die wesentlichen Befestigungsteile, nämlich die Köpfe 17 der Schrauben 16 und das Ende 50 des Spannhebels 41 durch die Tür 5 abgedeckt und somit verriegelt sind, so daß ein Lösen der Befestigung nur bei geöffneter Tür 5 möglich ist. Da die Tür durch ein Schloß verschließbar ist, kann nur die befugte Person den Dachträger 2 nach Öffnung der Tür 5 entfernen.

**Ansprüche**

1. Vorrichtung zum Befestigen eines Auto-Dachträgers an einem Autodach ohne oder mit von der Autotür verdeckter Regenrinne gekennzeichnet durch wenigstens ein am Dachrand befestigbares oder befestigtes zusätzliches Bauteil (12; 26) mit Befestigungsmitteln (19; 33, 34) zur lösbaren Befestigung des Dachträgers (2) am Bauteil (12, 26).

2. Vorrichtung nach Anspruch 1, dadurch gekennzeichnet, daß das Bauteil (26) plattenförmig ausgebildet ist und vorzugsweise am Dach (1) anliegt.

3. Vorrichtung nach Anspruch 1 oder 2, dadurch gekennzeichnet, daß das Bauteil (26) wenigstens zwei einen Abstand voneinander aufweisende Befestigungsstellen (23) zur Befestigung am Dach (1) aufweist.

4. Vorrichtung nach einem der Ansprüche 1 bis 3, dadurch gekennzeichnet, daß bei einer von der Tür (5) verdeckten Regenrinne (4) das Bauteil (12; 26) im Bereich der dem Dach (1) zugewandten Flanke (9) der Regenrinne (4) befestigt oder befestigbar ist.

5. Vorrichtung nach einem der Ansprüche 1 bis 4, dadurch gekennzeichnet, daß das Bauteil (12, 26) durch wenigstens eine Schraube (16) am Dach (1) befestigt oder befestigbar ist.

6. Vorrichtung nach einem der Ansprüche 1 bis 5, dadurch gekennzeichnet, daß das Bauteil eine am Dach (1) befestigte oder befestigbare Einsatzmutter (12) ist.

7. Vorrichtung nach Anspruch 5 oder 6, dadurch gekennzeichnet, daß die Schraube (16) gleichzeitig zur Befestigung des Dachträgers (2) am Bauteil (12, 26) dient.

8. Vorrichtung nach einem der Ansprüche 1 bis 7, dadurch gekennzeichnet, daß der oder die Stützfüße (3) des Dachträgers (2) jeweils ein Stützteil (27) und ein Halteteil (28) aufweisen, die zwecks Halterung am Bauteil (26) relativ zueinander verstellbar sind.

9. Vorrichtung nach Anspruch 8, dadurch gekennzeichnet, daß die Befestigungsmittel (29) am Bauteil (26) zur Befestigung des Dachträgers (2) wenigstens teilweise durch Vor-oder Rücksprünge (32 bis 35) gebildet sind.

10. Vorrichtung nach Anspruch 9, dadurch gekennzeichnet, daß die Vor-oder Rücksprünge durch Ausbiegungen bzw. Abwinkelungen (32 bis 35) ggf. im Bereich von Einschnitten (36) oder Aussparungen gebildet sind.

11. Vorrichtung nach Anspruch 9 oder 10, dadurch gekennzeichnet, daß das Bauteil (26) einen Vorsprung (33) für das Stützteil (27) und einen ggf. durch einen Vorsprung (38) gebildeten Rücksprung (34) für das Halteteil (28) aufweist.

12. Vorrichtung nach einem der Ansprüche 5 bis 11, dadurch gekennzeichnet, daß das wenigstens eine Loch (13,46) im Stützfuß (3) zur Aufnahme der Befestigungsmittel bzw. der Schraube (16,47,48) nach unten oder seitlich offen ist und zum Rand des Stützfußes (3) hin vorzugsweise divergiert.

13. Vorrichtung nach einem der Ansprüche 1 bis 12,
dadurch gekennzeichnet,
daß das Halteteil (28) durch ein Spannteil (41) verstellbar ist.

14. Vorrichtung nach Anspruch 13,
dadurch gekennzeichnet,
daß das Spannteil durch einen Schwenkhebel (41) gebildet ist, der in einem Abstand von seiner Schwenkachse (42) mit dem Halteteil (28) verbunden ist.

15. Vorrichtung nach Anspruch 14,
dadurch gekennzeichnet,
daß der Schwenkhebel (41) quer zur Ebene der Tür (5) schwenkbar ist.

16. Vorrichtung nach einem der Ansprüche 1 bis 15,
dadurch gekennzeichnet,
daß wenigstens ein Befestigungsglied (29, 16, 23; 29, 31; 41) von der Tür (5) in deren Schließstellung überdeckt ist.

17. Vorrichtung nach Anspruch 15 oder 16,
dadurch gekennzeichnet,
daß das Halteteil (28) im von der Tür (5) überdeckten Bereich eine Ausnehmung (48) aufweist, in der ein Teil (49) des Schwenkhebels aufgenommen ist.

18. Vorrichtung nach einem der Ansprüche 13 bis 17,
dadurch gekennzeichnet,
daß der Schwenkhebel (41) in seiner Spannstellung wenigstens teilweise in eine Ausnehmung (44) des Stützfußes (3) versenkt ist.

19. Vorrichtung nach einem der Ansprüche 1 bis 18,
dadurch gekennzeichnet,
daß das Bauteil (12, 26) aus Kunststoff oder vorzugsweise aus Metall besteht und zwecks Verhinderung der Korossion aus nichtrostendem Material besteht oder oberflächenbehandelt ist.

20. Vorrichtung zum Befestigen eines Auto-Dachträgers an einem Autodach ohne oder mit von der Autotür verdeckter Regenrinne, mit wenigstens einem Stützfuß, der durch wenigstens ein Befestigungsglied bzw. eine das Befestigungsglied beaufschlagendes Stellglied form-und/oder kraftschlüssig am Dach befestigbar bzw. lösbar ist, oder Vorrichtung nach wenigstens einem der Ansprüche 1 bis 19,
dadurch gekennzeichnet,
daß wenigstens ein Teil des Befestigungsgliedes (16, 17) oder Stellgliedes (41) in seiner Verschlußstellung von der Tür (5) überdeckt ist.

21. Vorrichtung nach Anspruch 20,
dadurch gekennzeichnet,
daß das Stell-oder Befestigungsglied (16, 17; 41) quer zur Türebene (5) verstellbar ist.

22. Vorrichtung nach Anspruch 21,
dadurch gekennzeichnet,
daß das Stellglied ein Schwenkhebel (41) ist.

FIG.1

FIG.2

FIG. 3

FIG.5

FIG.6

FIG.4

FIG.7

FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C-3 050 024 (FORD-WERKE) <br> * Insgesamt * <br><br> --- | 1-5,8-11,16 | B 60 R 9/04 |
| X | DE-A-3 032 099 (DAIMLER-BENZ) <br> * Abbildung 1; Seite 5, Zeile 21 - Seite 6, Zeile 17 * <br><br> --- | 1,4,6,7,16,20,21 | |
| X | DE-A-2 933 718 (AUDI NSU AUTO UNION) <br> * Insgesamt * <br><br> --- | 1-5,8-10,13-16 | |
| X <br> Y | FR-A-2 541 640 (FORD-FRANCE) <br> * Insgesamt * <br><br> --- | 1,2,4,5,8-11 <br> 13-15,18 | |
| Y | DE-A-3 421 543 (B.M.W.) <br> * Abbildungen; Seite 3, Zeile 23 - Seite 7, Zeile 2 * <br><br> --- | 13-15,18 | |
| A | EP-A-0 177 758 (FIAT AUTO) <br> * Insgesamt * <br><br> ----- | 1-5,8-11,13,16,19 | **RECHERCHIERTE SACHGEBIETE (Int. Cl.4)** <br><br> B 60 R |

Der vorliegende Recherchenbericht wurde für alle Patentansprüche erstellt

| Recherchenort | Abschlußdatum der Recherche | Prüfer |
|---|---|---|
| DEN HAAG | 13-05-1988 | DUBOIS B.F.J. |